(19) Europäisches Patentamt / European Patent Office / Office européen des brevets

(11) **EP 3 264 214 A1**

(12) **DEMANDE DE BREVET EUROPEEN**

(43) Date de publication:
03.01.2018 Bulletin 2018/01

(51) Int Cl.:
*G05D 1/08* (2006.01)

(21) Numéro de dépôt: **17173552.5**

(22) Date de dépôt: **30.05.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **27.06.2016 FR 1655986**

(71) Demandeur: **Parrot Drones**
**75010 Paris (FR)**

(72) Inventeurs:
• **MARI MARI, Marc**
**75018 Paris (FR)**
• **BENATAR, Yoni**
**93260 LES LILAS (FR)**

(74) Mandataire: **Dupuis-Latour, Dominique et al**
**Bardehle Pagenberg**
**10, boulevard Haussmann**
**75009 Paris (FR)**

(54) **PROCÉDÉ DE CONVERSION DYNAMIQUE D'ATTITUDE D'UN DRONE À VOILURE TOURNANTE**

(57) L'invention concerne un procédé de conversion dynamique d'attitude d'un drone à voilure tournante comprenant un corps de drone (12) comprenant une carte électronique contrôlant le pilotage du drone et quatre bras de liaison (16), chaque bras comprenant fixé solidairement un bloc propulseur (14). Les bras de liaison (16) forment des ailes portantes. Le procédé comprend l'exécution, à réception d'une instruction de conversion de vol permettant au drone d'effectuer une conversion du vol entre un vol utilisant la voilure tournante et un vol utilisant au moins en partie la portance des ailes, ladite conversion étant définie par un angle de tangage à atteindre $\theta_{ref}$, d'une séquence d'étapes répétée jusqu'à atteindre ledit angle de tangage $\theta_{ref}$, estimer l'angle de tangage courant $\theta_{est}$ dudit drone, déterminer une trajectoire angulaire en fonction de l'angle de tangage à atteindre $\theta_{ref}$, et envoyer une ou plusieurs commandes différenciées à un ou plusieurs blocs propulseurs de manière à produire une rotation du drone autour de l'axe de tangage, asservies à la trajectoire en angle et à l'angle de tangage courant estimé $\theta_{est}$.

Figure 6

**Description**

L'invention concerne les drones de loisir, notamment les drones à voilure tournante tels que les quadricoptères et analogues.

Ces drones volants comprennent un corps de drone et une pluralité de blocs propulseurs montés à l'extrémité de bras de liaison, chaque bloc propulseur étant muni d'une hélice entrainée par un moteur individuel. Les différents moteurs sont commandables de manière différenciée pour piloter le drone en attitude et en vitesse.

Un tel exemple est le *Rolling Spider* commercialisé par Parrot Drones SAS, Paris, France.

Ces quadricoptères sont équipés de quatre blocs propulseurs munis chacun d'hélice. Les hélices de deux blocs propulseurs tournent dans le sens horaire et les hélices des deux autres blocs propulseurs tournent dans le sens antihoraire. Les blocs propulseurs munis d'hélices tournant dans le même sens de rotation sont placés sur la même diagonale. Chaque hélice exerce sur le drone une force de traction due à la portance de l'hélice, cette force de traction étant dirigée vers le haut, et un moment qui est de sens opposé à son sens de rotation.

Les WO 2010/061099 A2, EP 2 364 757 A1 et EP 2 450 862 A1 (Parrot) décrivent le principe de pilotage d'un drone par l'intermédiaire d'un téléphone ou tablette multimédia à écran tactile et accéléromètres intégrés, par exemple un *smartphone* de type *iPhone* ou une tablette de type *iPad* (marques déposées).

Les commandes émises par le dispositif de pilotage sont au nombre de quatre, à savoir la rotation en roulis, c'est-à-dire le mouvement de rotation autour de son axe longitudinal, le tangage c'est-à-dire le mouvement de rotation autour de l'axe transversal, le cap aussi appelé lacet, c'est-à-dire la direction vers laquelle le drone est orienté et l'accélération verticale. Lorsqu'une commande de cap est demandée au drone, les blocs propulseurs ayant des hélices tournant dans un sens tournent plus vite, c'est-à-dire qu'une accélération des blocs propulseurs est réalisée alors que les deux autres blocs propulseurs tournent moins vite.

De la sorte, la somme des forces de portance compense le poids du drone mais la somme des moments n'est plus nulle et donc le drone tourne selon un cap. La rotation selon un cap du drone à droite ou à gauche dépend des deux blocs propulseurs en diagonale pour lesquels une accélération de leur rotation est demandée.

Lorsqu'une commande de tangage est demandée au drone, les blocs propulseurs situés dans la direction du drone sont ralentis et les blocs propulseurs situés à l'arrière par rapport à la direction de déplacement du drone sont accélérés.

Lorsqu'une commande de roulis est demandée au drone, les blocs propulseurs situés dans la direction de rotation souhaitée du drone sont ralentis et les blocs propulseurs situés du côté opposé sont accélérés. Toutefois, ce type de drone est limité dans son application, puisqu'il permet uniquement un vol quadricoptère c'est-à-dire à voilure tournante.

Il est connu dans le domaine des modèles réduits, un certain nombre de dispositifs volants, de type avion, qui permettent non pas un vol par sustentation et propulsion par une voilure tournante, mais un vol assuré par un propulseur et dont la portance est assurée par les ailes portantes dudit avion. Les avions sont donc considérés comme des appareils à voilure fixe.

Toutefois, il est observé que ces modèles réduits présentent des difficultés de pilotage et font souvent l'objet de chutes dommageables au modèle réduit.

Le but de l'invention est de proposer un drone à voilure tournante permettant à un tel drone de voler non seulement en utilisant la portance des surfaces de rotation, à savoir la voilure tournante, mais également de voler tel qu'un avion en utilisant une voilure fixe, tout en bénéficiant du contrôle aisé qu'offrent les drones aujourd'hui. Pour ce faire, le drone volant classiquement en utilisant la voilure tournante doit opérer une conversion de sorte à voler en utilisant la voilure fixe du drone.

A cet effet, l'invention propose un procédé de conversion dynamique d'attitude d'un drone à voilure tournante comprenant un corps de drone comprenant une carte électronique contrôlant le pilotage du drone, quatre bras de liaison, chaque bras comprenant fixé solidairement un bloc propulseur.

De façon caractéristique, les bras de liaison formant des ailes portantes, le procédé comprend l'exécution, à réception d'une instruction de conversion de vol permettant au drone d'effectuer une conversion du vol entre un vol utilisant la voilure tournante et un vol utilisant au moins en partie la portance des ailes, ladite conversion étant définie par un angle de tangage à atteindre $\theta_{ref}$, d'une séquence d'étapes répétée jusqu'à atteindre ledit angle de tangage $\theta_{ref}$ :

- estimer l'angle de tangage courant $\theta_{est}$ dudit drone,
- déterminer une trajectoire angulaire en fonction de l'angle de tangage à atteindre $\theta_{ref}$,
- envoyer une ou plusieurs commandes différenciées à un ou plusieurs blocs propulseurs de manière à produire une rotation du drone autour de l'axe de tangage, asservies à la trajectoire en angle et à l'angle de tangage courant estimé $\theta_{est}$.

Selon diverses caractéristiques subsidiaires, prises isolément ou en combinaison :

- ladite instruction de conversion comprend l'angle de tangage à atteindre $\theta_{ref}$,
- la trajectoire angulaire est une trajectoire cible en accélération angulaire et/ou en vitesse angulaire et/ou en angle,
- l'étape d'estimation de l'angle de tangage courant $\theta_{est}$ dudit drone est effectuée à partir de la mesure de la vitesse angulaire du drone,
- le procédé comprend en outre, une étape de détermination d'une précommande d'anticipation à partir de la trajectoire angulaire et de l'angle de tangage courant estimé,

- à partir de la trajectoire angulaire déterminée et de la précommande d'anticipation, le procédé comprend en outre la génération de valeurs de consigne correspondant à une position angulaire à l'instant donné et appliquer ces valeurs de consigne à une boucle d'asservissement de contrôle des moteurs du drone,
- les valeurs de consigne sont des consignes d'angle d'inclinaison du drone par rapport à son axe de tangage,
- le procédé comprend en outre les étapes suivantes :

  - déterminer l'altitude dudit drone précédant l'exécution de l'instruction de conversion,
  - estimer l'altitude courante du drone,
  - déterminer une trajectoire en altitude et en vitesse verticale en fonction de l'altitude précédant l'exécution de l'instruction de conversion,
  - envoyer une ou plusieurs commandes différenciées à un ou plusieurs blocs propulseurs de manière à produire une correction de l'altitude du drone, asservies à la trajectoire en altitude et en vitesse verticale et à l'altitude courante estimée.

- le drone comprend en outre un bloc batterie, et le procédé comprend en outre une étape de mesure de la tension dudit bloc batterie et la ou les commandes différenciées sont en outre déterminées à partir de la tension dudit bloc batterie mesurée,
- le drone comprend en outre au moins un capteur à ultrason, le procédé comprend en outre une étape d'activation / désactivation du capteur à ultrason ;
- lors d'une conversion de vol entre un vol utilisant la voilure tournante vers un vol utilisant au moins en partie la portance des ailes, le procédé comprend en outre une étape préalable de réduction de la vitesse angulaire maximale sur l'axe de tangage et/ou de la vitesse angulaire maximale sur l'axe de roulis.
- lors d'une conversion de vol entre un vol utilisant au moins en partie la portance des ailes vers un vol utilisant la voilure tournante, l'angle de tangage à atteindre est sensiblement nul.

L'invention concerne également un drone à voilure tournante comprenant un corps de drone comprenant une carte électronique contrôlant le pilotage du drone et quatre bras de liaison, chaque bras comprenant fixé solidairement un bloc propulseur. Les bras de liaison forment des ailes portantes et le drone est apte à mettre en oeuvre le procédé de contrôle dynamique précédemment décrit.

L'invention concerne aussi un ensemble comprenant un dispositif de commande d'un drone à voilure tournante et un drone à voilure tournante tel que décrit précédemment, le dispositif de commande comprend un ensemble d'instructions de pilotage, une instruction de cet ensemble d'instruction est une instruction de conversion du vol du drone afin d'effectuer une conversion entre un vol en voiture tournante et un vol utilisant la portance des ailes.

Selon un mode de réalisation particulier, lors d'une instruction de conversion entre un vol utilisant la voilure tournante vers un vol utilisant au moins en partie la portance des ailes, l'instruction de conversion comprend un angle de tangage à atteindre $\theta_{ref}$.

Nous allons maintenant décrire un exemple de mise en oeuvre de la présente invention, en référence aux dessins annexés.

La Figure 1 est une vue d'ensemble montrant le drone objet de l'invention vu du dessus lorsque le drone est au sol.

La Figure 2 est une vue de côté du drone conformément à l'invention lorsque le drone est en vol en utilisant la portance des ailes.

La Figure 3 est une vue de dessus du drone conformément à l'invention lorsque le drone est en vol en utilisant la portance des ailes.

La Figure 4 illustre une vue arrière du drone conformément à l'invention lorsque le drone est en vol en utilisant la portance des ailes.

La Figure 5 est un diagramme d'état des étapes préliminaires à la conversion dynamique du drone.

La Figure 6 est un diagramme d'état de la conversion dynamique du drone conformément à l'invention.

La Figure 7 est un schéma par blocs des différents organes de contrôle et d'asservissement ainsi que de conversion dynamique d'un drone à voilure tournante conformément à l'invention.

Nous allons maintenant décrire un exemple de réalisation de l'invention.

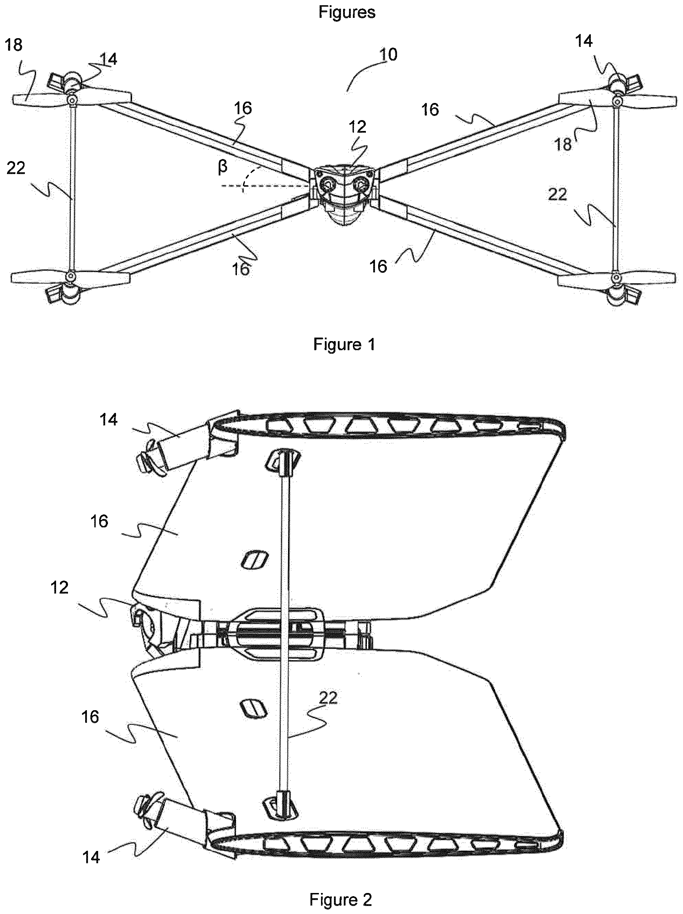

Sur la Figure 1, la référence 10 désigne de façon générale un drone à voilure tournante. Selon l'exemple illustré en Figure 1, il s'agit d'un drone de type quadricoptère dérivé du modèle *Rolling Spider* commercialisé par Parrot Drones SAS, Paris, France.

Le drone quadricoptère comporte un corps de drone 12 comprenant une carte électronique contrôlant le pilotage du drone, et quatre blocs propulseurs 14 fixés solidairement respectivement aux quatre bras de liaison 16. Les blocs propulseurs 14 sont pilotés indépendamment par un système intégré de navigation et de contrôle d'attitude. Chaque bloc propulseur 14 est muni d'une hélice 18 entraînée par un moteur individuel. Les différents moteurs sont commandables de manière différenciée pour piloter le drone en attitude et en vitesse et avec production d'une force ascensionnelle. Les hélices 18 de deux blocs propulseurs tournent dans le sens horaire et les hélices des deux autres blocs propulseurs tournent dans le sens antihoraire. Les blocs propulseurs munis d'hélices tournant dans le même sens de rotation sont placés sur la même diagonale.

De façon caractéristique de l'invention, les bras de liaison 16 forment des ailes portantes, sensiblement perpendiculaires au plan des hélices, permettant au drone d'assurer un vol soit en voilure tournante soit un vol appelé en vol avion, de manière à bénéficier de la portance des ailes portantes.

Selon un mode de réalisation particulier, les blocs propulseurs sont fixés sensiblement à l'extrémité des ailes portantes tel qu'illustré en figure 1.

De manière alternative, les blocs propulseurs peuvent être fixés sur quasiment toute la longueur des ailes portantes, notamment au niveau du bord d'attaque de chacune des ailes, toutefois une distance minimale entre deux blocs propulseurs voisins est à respecter, cette distance ne devant pas être inférieure à la somme des rayons des deux hélices desdits blocs propulseurs voisins.

Conformément à l'invention, le drone comprend des moyens de conversion de vol permettant au drone, après décollage en mode quadricoptère, c'est-à-dire en utilisant la portance des surfaces de rotation, d'effectuer une conversion de sorte que le drone vole en utilisant la portance des ailes.

Pour ce faire, le drone effectue une conversion d'un angle donné, à savoir d'un angle de tangage $\theta$ compris par exemple de 20° à 90°, et de manière préférentielle un angle de tangage $\theta$ compris entre 20° et 80° de sorte que le drone bénéficie de la portance des ailes pour voler. Ainsi, le drone est apte à voler classiquement en utilisant la portance des surfaces de rotation ou tel qu'un avion en utilisant la portance des ailes. Un tel drone présente l'avantage d'être apte à voler comme un avion mais permet un bon contrôle de la vitesse de vol puisqu'il est aussi apte à voler très lentement notamment si l'angle de conversion est un angle faible.

Si l'on définit le drone avant décollage selon les trois axes orthogonaux X, Y et Z, alors il sera appelé :

- axe X, l'axe de roulis qui est défini par le fait qu'une rotation du drone sur cet axe permet de faire déplacer le drone vers la droite ou vers la gauche, et
- axe Y, l'axe de tangage qui est défini par le fait qu'une rotation du drone sur cet axe permet de faire avancer ou reculer le drone,
- axe Z, axe de cap ou axe de lacet, qui est défini par le fait qu'une rotation du drone sur cet axe a pour effet de faire pivoter vers la droite ou vers la gauche l'axe principal du drone, donc la direction de progression du drone.

Ainsi, la conversion peut être définie par le fait que l'axe Z du drone, correspondant à l'axe de lacet lors du vol du drone en mode classique, c'est-à-dire en utilisant la portance de la voilure tournante, devient l'axe de roulis lorsque le drone passe en mode de vol avion, c'est-à-dire en utilisant la voilure fixe, autrement dit la portance des ailes.

Le drone illustré en figure 1 comprend quatre bras de liaison sous forme d'ailes portantes, toutefois, un tel drone pourrait comporter plus de quatre ailes portantes.

Selon un mode de réalisation particulier, le corps de drone 12 est de forme par exemple allongée. Selon ce mode de réalisation, les ailes portantes du drone sont fixées sur tout ou partie de la longueur du corps de drone.

Le drone illustré en figure 1 est tel que les ailes portantes 16 sont positionnées respectivement de chaque côté du corps de drone défini par le plan médian horizontal du corps de drone 12 lorsque le drone est en position de vol avion et les ailes portantes sont symétriques et forment par exemple un dièdre.

Selon un autre mode de réalisation, les ailes portantes de part et d'autre du corps de drone peuvent ne pas être symétriques par rapport audit plan médian horizontal du corps de drone.

Il est observé également que le drone illustré en figure 1 est tel que les ailes portantes 16 sont situées de chaque côté du drone par rapport au plan médian vertical 12 lorsque le drone est en position de vol avion et les ailes portantes sont symétriques.

Selon un autre mode de réalisation, les ailes portantes de part et d'autre du corps de drone peuvent ne pas être symétriques par rapport audit plan médian vertical du corps de drone.

La structure du drone telle qu'illustrée en figure 1 présente une forme de X ayant un angle de dièdre positif sur les ailes supérieures par rapport au plan médian horizontal du corps de drone lorsque le drone est en position de vol avion et un angle de dièdre négatif de même valeur sur les ailes inférieures par rapport audit plan médian horizontal. Toutefois, le drone peut comprendre des angles de dièdre positif et négatif de valeurs différentes.

Par exemple, l'angle de dièdre positif sur les ailes supérieures est compris entre 15 et 25° et de préférence 20°. De même, selon le drone illustré, l'angle de dièdre négatif sur les ailes inférieures est compris entre 15° et 25° et de préférence 20°.

Tel qu'il peut être observé sur la figure 1, les ailes portantes présentent une envergure telle que le bras de levier entre le centre de gravité du drone et le bloc propulseur permet un vol stable en mode avion. Selon l'exemple illustré en figure 1, l'envergure est de 30 cm.

En outre, les ailes portantes présentent une surface de portance appropriée de sorte à permettre au drone de voler en mode avion en utilisant la portance des ailes. La surface des ailes est déterminée de sorte à offrir une bonne portance sans impacter de façon majeure les performances de vol du drone en vol classique.

Tel qu'illustré en Figure 1, les ailes portantes 16 du drone forment un angle de flèche $\beta$ par rapport au corps de drone 12, l'angle de flèche $\beta$ peut être compris entre 5° et 20° et de préférence environ 10°.

Selon un mode de réalisation particulier, chacun des blocs propulseurs (hors hélices) du drone est dans le même plan que l'aile sur laquelle il est fixé. Autrement dit, chacune des hélices des blocs propulseurs est sur un plan sensiblement perpendiculaire au plan de la surface portante de l'aile sur laquelle l'hélice est fixée.

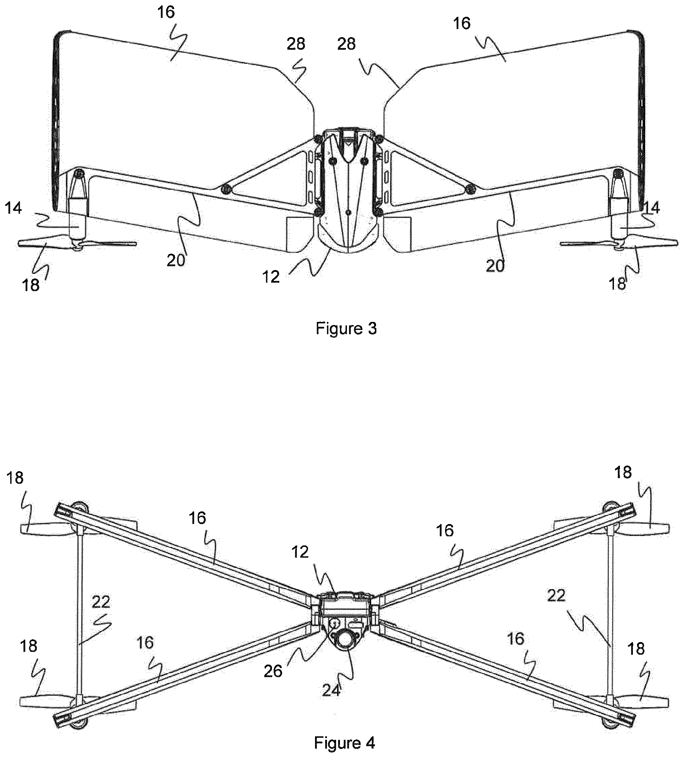

Toutefois, selon l'exemple de réalisation illustré en figure 1 et en figure 4, les quatre blocs propulseurs forment un angle d'inclinaison par rapport au plan médian horizontal du corps de drone, les deux blocs propulseurs positionnés d'un côté du corps de drone étant inclinés l'un vers l'autre respectivement selon un angle d'inclinaison vertical prédéterminé positif et un angle d'inclinaison vertical prédéterminé négatif. Et symétriquement, les deux blocs propulseurs positionnés de l'autre côté du corps de drone sont inclinés l'un vers l'autre respectivement selon le même angle d'inclinaison prédéterminé vertical positif et le même angle d'inclinaison prédéterminé vertical négatif.

En d'autres termes, les blocs propulseurs situés de part et d'autre du corps de drone au-dessus du plan médian horizontal du corps de drone, lorsque le drone est en position de vol avion, sont inclinés respectivement vers les blocs propulseurs situés du même côté du corps de drone en dessous dudit plan médian horizontal, et vice versa. Les blocs propulseurs situés de part et d'autre du corps de drone en-dessous dudit plan médian horizontal sont notamment inclinés respectivement vers les blocs propulseurs situés du même côté du corps de drone au-dessus du plan médian horizontal.

L'inclinaison des blocs propulseurs permet en mode avion de créer une composante de traction perpendiculaire à la direction horizontale d'avancement qui contribue à augmenter le couple disponible sur l'axe de lacet du drone, qui sinon résulterait uniquement du couple des hélices du drone. Cette augmentation de couple peut présenter un avantage pour le vol en mode avion, c'est-à-dire en utilisant la portance des ailes du drone. En effet, l'augmentation de couple permet de compenser l'inertie de déplacement du drone sur l'axe de lacet en mode avion, qui est beaucoup plus élevée que sur un drone classique, c'est-à-dire sans ailes portantes, du fait de la présence d'ailes portantes.

L'inclinaison des moteurs entraine une diminution de la portance générée puisqu'une partie seulement de la traction produite par les moteurs est appliquée sur le plan horizontal. Toutefois, une telle inclinaison créant une composante perpendiculaire de traction permet de contribuer à augmenter le contrôle du drone sur l'axe de lacet en mode avion puisque l'application d'une force horizontale sur le bras de levier existant entre les moteurs et le centre de gravité du drone, optimisé par le placement des blocs propulseurs sensiblement sur les extrémités des ailes, permet de créer un couple sur l'axe de lacet qui viendra s'ajouter au couple des hélices.

La traction nécessaire pour que le drone puisse voler en mode avion, c'est-à-dire en utilisant la portance des ailes, est inférieure à la traction nécessaire pour permettre au drone dans sa configuration de vol classique de maintenir un point fixe, c'est-à-dire un vol stationnaire.

En outre, il est à noter que l'axe Z du drone, correspondant à l'axe de lacet lorsque le drone vole en mode classique, c'est-à-dire en utilisant la voilure tournante, devient l'axe de roulis lorsque le drone vole en mode avion, c'est-à-dire sensiblement horizontalement en utilisant la portance des ailes.

Selon un mode de réalisation particulier, les angles d'inclinaison prédéterminés des quatre blocs propulseurs sont identiques en valeur absolue. Toutefois, selon un autre mode de réalisation, les blocs propulseurs situés au-dessus du plan médian horizontal du corps de drone lorsque le drone est en position de vol avion, peuvent avoir un angle d'inclinaison en valeur absolue différent des angles d'inclinaison des blocs propulseurs situés au-dessous dudit plan médian horizontal.

Selon un mode de réalisation particulier, les angles d'inclinaison prédéterminés sont compris entre 10° et 30°, et de préférence d'environ 20°.

Il a été observé qu'un angle d'inclinaison de 20° en valeur absolue appliqué aux blocs propulseurs a pour conséquence des pertes de traction d'environ 6%. En outre, la circulation du flux d'air autour des ailes quand les moteurs tournent a pour conséquence une augmentation des pertes de traction du fait de l'inclinaison des blocs propulseurs. Ainsi selon ce mode de réalisation, les pertes de traction sont d'environ 24%.

Selon un mode de réalisation particulier, les blocs propulseurs peuvent être sensiblement inclinés en convergeant sur l'axe médian principal du drone et donc avoir une valeur d'angle d'inclinaison par rapport au plan médian vertical du corps de drone lorsque le drone est en position de vol avion.

Le drone illustré en figures 1, 2 et 3 comprend quatre ailes portantes fixées sur le corps de drone, chaque aile ayant une forme de parallélogramme. Toutefois, d'autres formes d'ailes peuvent être envisagées.

Les ailes portantes 16 peuvent être reliées entre elles deux à deux par au moins un moyen de renfort 22.

Selon un mode de réalisation particulier, les ailes portantes situées d'un même côté du plan médian vertical du corps de drone lorsque le drone est en position de vol avion, sont reliées entre elles par au moins un moyen de renfort 22 fixé par exemple sensiblement à proximité des blocs propulseurs. La figure 1 illustre un mode de réalisation dans lequel un unique moyen de renfort est fixé entre les ailes portantes d'un même côté du drone.

Selon un mode de réalisation particulier du drone, les ailes peuvent être pourvues d'ailerons permettant de contrôler les rotations du drone lors d'un vol en mode avion.

Selon un autre mode de réalisation particulier, le drone peut être dépourvu de gouverne de direction telle que des gouvernes de type ailerons. Le déplacement du drone en vol en mode avion sera alors commandé par un contrôle de la vitesse de rotation des différents blocs propulseurs.

Le drone est en outre muni de capteurs inertiels (accéléromètres et gyromètres) permettant de mesurer avec une certaine précision les vitesses angulaires et les angles d'attitude du drone, c'est-à-dire les angles d'Euler (tangage $\theta$, roulis $\varphi$ et cap $\psi$) décrivant l'inclinaison du drone par rapport à un plan horizontal d'un repère terrestre établi avant le décollage du drone au moment de la mise sous tension du drone suivant la convention classique NED *("North, East, Down"* en terminologie anglosaxonne), étant entendu que les deux composantes longitudinale et transversale de la vitesse horizontale sont intimement liées à l'inclinaison suivant les deux axes respectifs de tangage et de roulis.

Le drone 10 est piloté par un dispositif de pilotage distant tel qu'un téléphone ou une tablette multimédia à écran tactile et accéléromètres intégrés, par exemple un téléphone cellulaire de type *iPhone* (marque déposée) ou autre, ou une tablette de type *iPad* (marque déposée) ou autre. Il s'agit d'un appareil standard, non modifié si ce n'est le chargement d'un logiciel applicatif spécifique pour contrôler le pilotage du drone 10. Selon ce mode de réalisation, l'utilisateur contrôle en temps réel le déplacement du drone 10 via le dispositif de pilotage.

Le dispositif de pilotage distant est un appareil pourvu d'un écran tactile affichant un certain nombre de symboles permettant l'activation de commandes par simple contact du doigt d'un utilisateur sur l'écran tactile.

Le dispositif de pilotage communique avec le drone 10 via un échange bidirectionnel de données par liaison sans fil de type réseau local Wi-Fi (IEEE 802.11) ou Bluetooth (marques déposées): du drone 10 vers le dispositif de pilotage notamment pour la transmission de données de vol, et du dispositif de pilotage vers le drone 10 pour l'envoi de commandes de pilotage.

Le dispositif de pilotage est également pourvu de capteurs d'inclinaison permettant de contrôler l'attitude du drone en envoyant des commandes selon des axes de roulis, de cap et de tangage dans le repère du drone (on pourra se référer au WO 2010/061099 A2 pour plus de détails sur ces aspects du système).

Quel que soit le mode de vol du drone, le dispositif de pilotage présente sur l'écran tactile les mêmes symboles de navigation, toutefois, les commandes de navigation émises au drone seront analysées au regard du repère réel du drone.

Ainsi, l'utilisateur pilote directement le drone par exemple, par une combinaison :

- de commandes disponibles sur l'écran tactile, notamment "montée/descente" et
- de signaux émis par le détecteur d'inclinaison de l'appareil : par exemple, pour faire avancer le drone l'utilisateur incline son appareil selon l'axe de tangage correspondant, et pour déporter le drone à droite ou à gauche il incline ce même appareil par rapport à l'axe de roulis.

L'écran tactile comprend également un ou plusieurs symboles afin de commander la conversion du drone d'un mode de vol classique, c'est-à-dire en utilisant la portance de la voilure tournante en mode de vol avion, c'est-à-dire en utilisant la voilure fixe, autrement dit la portance des ailes et vice et versa.

En outre, l'écran tactile peut comprendre un ou plusieurs symboles permettant une conversion de vol du drone du mode de vol classique vers un vol avion mais sur le dos de l'avion.

En outre, il peut être possible d'indiquer sur l'écran tactile une indication d'angle de tangage pour la conversion souhaitée soit directement soit indirectement en sélectionnant par exemple un niveau d'aptitude à voler en mode avion ou en faisant varier un curseur proportionnel à l'angle de tangage du drone en mode avion souhaité.

Selon un autre mode de réalisation, le passage du mode de vol classique en mode de vol avion, est réalisé sur l'écran tactile à partir d'un composant d'interface graphique de type boite de vitesse, où chaque échelon de la boite correspond à un certain angle de tangage du drone en mode avion.

En particulier, ce composant d'interface graphique peut prendre la forme d'un curseur de défilement (« slider » en terminologie anglo-saxonne). Selon ce mode de réalisation, l'utilisateur du drone déplace son doigt sur le curseur de défilement afin d'atteindre le premier échelon. À chaque échelon du composant d'interface graphique correspond un angle de tangage du drone en mode avion. L'utilisateur du drone peut ensuite décider de modifier l'angle de tangage du drone soit avec un angle plus élevé soit avec un angle plus faible. Pour cela, l'utilisateur peut déplacer le curseur de défilement du composant d'interface graphique de sorte à sélectionner l'échelon supérieur notamment le second échelon afin d'accroitre l'angle de tangage du drone.

Dans un mode de réalisation particulier, le composant d'interface graphique comprend trois échelons correspondant respectivement à trois angles différents de tangage du drone, le premier échelon correspondant à un angle de tangage faible alors que le troisième échelon correspondant à un angle de tangage élevé.

Le composant d'interface graphique peut également comprendre un curseur autour de l'échelon de sorte à faire varier la vitesse courante du drone en mode de vol avion.

Pour ce faire, à partir des instructions de l'utilisateur données par manipulation, par exemple du composant d'interface graphique, des commandes de pilotage sont émises au drone afin ensuite de déterminer les commandes à envoyer aux différents blocs propulseurs de manière à produire une rotation du drone autour de l'axe de tangage du drone en fonction de la commande de l'utilisateur.

Cette commande de pilotage peut comprendre un angle de tangage souhaité par l'utilisateur, c'est-à-dire l'angle de tangage à atteindre $\theta_{ref}$.

Afin de permettre la mise en oeuvre de la commande de conversion par le drone, en particulier, afin de convertir dynamiquement l'attitude du drone, il est mis en oeuvre un procédé de conversion dynamique d'attitude conformément à l'invention qui est maintenant décrit.

Le procédé tel que décrit ci-après est le procédé de conversion dynamique d'attitude d'un drone à voilure tournante mis en oeuvre à réception d'une instruction de conversion de vol permettant au drone d'effectuer une conversion du vol entre un vol utilisant la voilure tournante et un vol utilisant au moins en partie la portance des ailes. En d'autres termes, le procédé conformément à l'invention permet une conversion du drone d'un mode classique de vol vers le mode de vol avion et une conversion du drone d'un mode de vol avion vers un mode classique de vol. Dans le premier cas, l'angle de tangage que doit atteindre le drone est indiqué et dans le second cas, l'angle de tangage est un angle sensiblement nul par exemple égale à 0°.

Conformément à l'invention, la conversion va être réalisée selon un angle de tangage souhaité $\theta_{ref}$. Pour réaliser cette conversion, l'attitude du drone est contrôlée par l'envoi de commandes différenciées à un ou plusieurs desdits blocs propulseurs 14 de manière à produire une rotation du drone autour de l'axe de tangage du drone depuis une position angulaire courante vers une position angulaire finale, ces axes étant définis dans le repère du drone.

Ainsi, la conversion du drone entre un vol utilisant la voilure tournante et un vol utilisant au moins en partie la portance des ailes, va être réalisée par l'envoi des commandes différenciées à un ou plusieurs desdits blocs propulseurs. L'utilisateur va donc par activation d'une ou plusieurs commandes de pilotage sur le dispositif de pilotage distant, permettre la conversion du mode de vol du drone, les commandes de pilotage provoquant une adaptation du régime de rotation des blocs propulseurs.

Afin d'effectuer une conversion coordonnée du drone, selon un mode de réalisation de l'invention, le système intégré de navigation et de contrôle d'attitude du drone va exécuter une séquence d'étapes répétée jusqu'à atteindre ledit angle de tangage $\theta_{ref}$. Ladite séquence comprend notamment i) l'estimation de l'angle de tangage courant $\theta_{est}$ dudit drone à partir de la mesure de la vitesse angulaire du drone, ii) la détermination d'une trajectoire angulaire à partir de l'angle de tangage à atteindre $\theta_{ref}$, et iii) l'envoi d'une ou plusieurs commandes différenciées à un ou plusieurs blocs propulseurs de manière à produire une rotation du drone autour de l'axe de tangage, asservies à la trajectoire angulaire et à l'angle de tangage courant estimé.

La trajectoire angulaire est une trajectoire cible en accélération angulaire et/ou en vitesse angulaire et/ou en angle.

Il va être maintenant décrit les différentes étapes du procédé mis en oeuvre dans le drone pour réaliser la conversion dynamique d'attitude du drone et en particulier déterminer les commandes différenciées à envoyer à un ou plusieurs blocs propulseurs du drone.

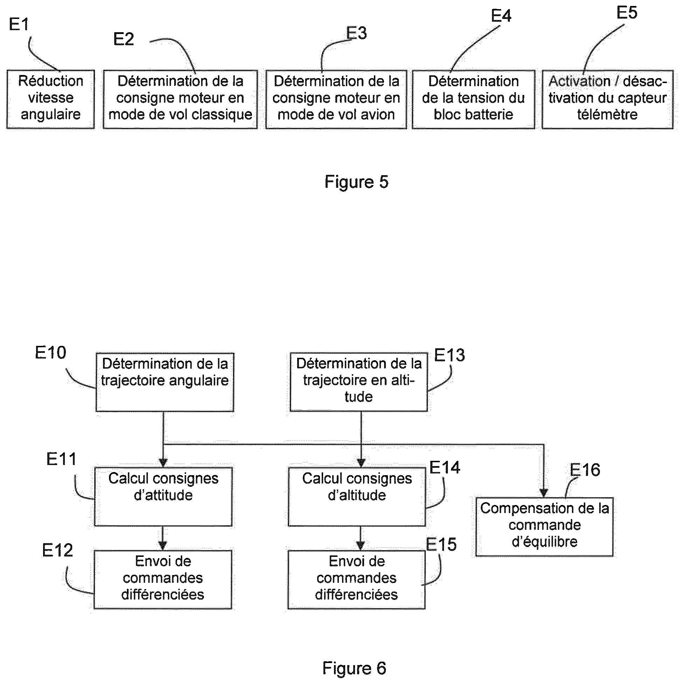

Le procédé de conversion dynamique peut comprendre une première phase de préparation à la conversion illustrée en Figure 5.

Le procédé comprend une étape E1 mise en oeuvre lors d'une conversion de vol entre un vol utilisant la voilure tournante vers un vol utilisant au moins en partie la portance des ailes. Au cours de cette étape, le procédé comprend une réduction de la vitesse angulaire maximale sur l'axe de tangage et/ou de la vitesse angulaire maximale sur l'axe de roulis.

Le procédé comprend une étape E2 consistant en une étape de détermination de la consigne moteur à appliquer au moteur lorsque le drone est en mode de vol classique lorsque l'angle de tangage $\theta$ est nul ou sensiblement nul.

Le procédé comprend une étape E3 consistant en une étape de détermination de la consigne moteur à appliquer au moteur lorsque le drone est en mode de vol avion lorsque l'angle de tangage $\theta$ est nul ou sensiblement nul.

Les consignes moteur de l'étape E2 et de l'étape E3 sont calculées respectivement par un moyen d'estimation d'équilibre du drone en vol classique et par un modèle aérodynamique du drone (voir ci-après) décrivant les consignes à appliquer aux moteurs pour chaque angle de tangage du drone en mode de vol avion afin de maintenir l'avion à une altitude constante.

Le procédé peut comprendre en outre une étape E4 de détermination de la valeur courante de la tension du bloc batterie du drone.

Au cours de la phase de préparation à la conversion, le procédé peut comprendre une étape E5 qui désactive l'utilisation du capteur télémètre à ultrason notamment lors d'une conversion de vol du drone du mode de vol classique en utilisant la portance des hélices vers un mode de vol avion en utilisant la portance des ailes. Toutefois, lors d'une conversion de vol du drone du mode de vol avion vers le mode de vol classique, l'étape E5 active l'utilisation du capteur télémètre à ultrason.

Dans un mode de réalisation particulier, la désactivation du capteur télémètre à ultrason est réalisée uniquement lorsque l'angle de tangage du drone est supérieur à un seuil donné. En d'autres termes, lorsque l'angle d'inclinaison du drone par rapport à l'horizontale est inférieur à un certain seuil alors le capteur télémétrique à ultrason est désactivé.

Selon un autre mode de réalisation, le capteur télémètre à ultrason n'est pas désactivé mais le signal émis par celui-ci est pris en compte uniquement lorsque l'angle de tangage du drone est inférieur à un seuil prédéterminé, par exemple 45 degrés.

Il est à noter que les étapes E1 à E5 peuvent être exécutées séquentiellement. De même, les étapes E1 à E5 peuvent être réalisées en parallèles les unes des autres, tel qu'illustré en Figure 5.

Le procédé se poursuit par une séquence d'étapes mise en oeuvre dans le drone pour réaliser la conversion dynamique d'attitude du drone illustrée en figure 6, la séquence d'étapes va être exécutée de manière itérative jusqu'à la fin de la réalisation de la conversion. En d'autres termes, cette séquence d'étapes est réalisée tant que l'angle de tangage estimé $\theta_{est}$ du drone n'a pas atteint l'angle de tangage $\theta_{ref}$.

La séquence d'étapes débute par l'étape E10 de détermination d'une trajectoire angulaire et d'une précommande d'anticipation à partir des données de vitesse de déplacement du drone dans un repère lié au corps du drone, c'est-à-dire la vitesse horizontale de déplacement du drone, de l'angle de tangage estimé $\theta_{est}$ du drone et de l'angle de tangage à atteindre $\theta_{ref}$.

Ainsi, le système intégré de navigation et de contrôle d'attitude du drone va déterminer, à partir d'un modèle de la dynamique du drone :

- une trajectoire angulaire, c'est-à-dire une trajectoire cible en accélération angulaire et/ou en vitesse angulaire et/ou en angle, correspondant à la consigne donnée par l'utilisateur et utilisée comme référence par le système intégré de navigation et de contrôle d'attitude du drone, et

- une précommande d'anticipation afin d'exécuter cette trajectoire en boucle ouverte, cette précommande étant transmise au système intégré de navigation et de contrôle d'attitude du drone afin d'anticiper la trajectoire à parcourir. Cette précommande d'anticipation permet d'orienter le drone en mouvement vers l'inclinaison en tangage souhaitée par l'utilisateur, le système intégré de navigation et de contrôle d'attitude du drone neutralisant les perturbations par rapport à la trajectoire en fonction de l'angle de tangage courant estimé.

Lors des étapes E11 et E12 du procédé, à partir de la trajectoire angulaire déterminée, de la précommande d'anticipation et des mesures provenant de la centrale inertielle du drone, le système intégré de navigation et de contrôle d'attitude du drone va générer une ou des commandes différenciées et va les transmettre à un ou plusieurs des blocs propulseurs du drone de manière à produire la rotation du drone autour de l'axe de tangage du drone.

Selon un mode de réalisation, l'estimation de l'angle de tangage courant $\theta_{est}$ dudit drone est effectuée à partir de la mesure de la vitesse angulaire du drone.

En effet, l'étape E10 est suivie d'une étape E11 de calcul de consignes d'attitude à partir de la trajectoire angulaire déterminée, de la précommande d'anticipation et des mesures provenant de la centrale inertielle du drone. Pour ce faire, l'étape E11 comprend la génération de valeurs de consigne d'angle de tangage.

L'étape E11 est suivie d'une étape E12 d'envoi d'une ou plusieurs commandes différenciées déterminées à un ou plusieurs desdits blocs propulseurs du drone en fonction des valeurs de consigne d'angle de tangage générées. Pour ce faire, l'étape E12 comprend l'application de ces valeurs de consigne à une boucle d'asservissement de contrôle des moteurs du drone.

Parallèlement à la gestion du changement d'attitude du drone entre la position de vol classique et le mode de vol avion, le procédé comprend en outre la détermination de l'altitude dudit drone et la détermination d'une ou plusieurs commandes différenciées à partir de l'altitude du drone, afin de contrôler au cours de la conversion l'altitude du drone notamment pour maintenir le drone à l'altitude précédant l'exécution de l'instruction de conversion. La gestion de l'altitude du drone est réalisée notamment aux étapes E13 à E15 décrites ci-dessous.

L'étape E15 réalisée par exemple en parallèle de l'étape E10, détermine une trajectoire en altitude et en vitesse verticale et une précommande d'anticipation.

Pour ce faire, il est estimé l'altitude courante du drone puis à partir i) de l'altitude courante estimée du drone, ii) de l'altitude estimée du drone précédant l'exécution de l'instruction de conversion et iii) de la vitesse aérodynamique de déplacement du drone, c'est-à-dire la vitesse horizontale de déplacement du drone, le système intégré de navigation et de contrôle d'attitude du drone va déterminer, à partir d'un modèle de la dynamique du drone :

- une trajectoire en altitude et en vitesse verticale correspondant à l'information d'altitude du drone déterminée avant l'exécution de l'instruction de conversion et utilisée comme référence par le système intégré de navigation et de contrôle d'altitude du drone et

- une précommande d'anticipation afin d'exécuter cette trajectoire en boucle ouverte, cette précommande étant transmise au système intégré de navigation et de contrôle d'altitude du drone afin d'anticiper la trajectoire à parcourir. Cette précommande d'anticipation permet d'orienter le drone en mouvement sur la trajectoire déterminée, le système intégré de navigation et de contrôle d'altitude du drone neutralisant les perturbations par rapport à la trajectoire.

L'étape E13 est suivie d'une étape E14 de génération des consignes d'altitude à partir de la trajectoire en altitude et en vitesse verticale déterminée, de la précommande d'anticipation et des mesures provenant de la centrale inertielle du drone. Pour ce faire, l'étape E14 comprend la génération de valeurs de consigne d'altitude.

L'étape E13 peut prendre également en compte, le cas échéant, une consigne de vitesse ascensionnelle ajoutée par l'utilisateur à la consigne d'altitude précitée.

L'étape E14 est suivie d'une étape E15 d'envoi d'une ou plusieurs commandes différenciées déterminées à un ou plusieurs desdits blocs propulseurs du drone en fonction des valeurs de consigne d'altitude générées. Pour ce faire, l'étape E15 comprend l'application de ces valeurs de consigne à une boucle d'asservissement de contrôle des moteurs du drone. Le procédé comprend en outre une étape E16 réalisée par exemple en parallèle des étapes E11 et E14, de compensation de la commande d'équilibre du drone en fonction de la tension de batterie, déterminée notamment lors de l'étape E4.

En particulier, la ou les commandes différenciées générées par ledit procédé sont en outre déterminées à partir de la tension dudit bloc batterie mesurée.

Selon un mode de réalisation particulier, les commandes différenciées déterminées aux étapes E12 et E15 afin de commander les blocs propulseurs du drone, peuvent être mixées avant l'envoi de ces commandes auxdites blocs propulseurs du drone.

Afin de déterminer la vitesse aérodynamique V du drone, il est nécessaire dans un premier temps de déterminer le coefficient de portance des ailes, notamment à partir de la géométrie de celles-ci. Selon un mode de réalisation particulier, il est utilisé la théorie des profils minces. Cette théorie est principalement valide lorsque le drone vole quasiment en ayant un angle de roulis de 90°. Cette théorie permet d'obtenir une courbe de vitesse pour les différentes valeurs d'angle de tangage du drone. Les valeurs de vitesse sont légèrement sous-estimées mais permettent tout de même une bonne évaluation du coefficient de portance des ailes. Le coefficient de portance $C_L$ est défini de la manière suivante :

$$C_L = +2\pi\alpha\frac{\Lambda}{\Lambda + 2} \text{ , avec } \Lambda = \frac{b^2}{S}$$

Avec $b$ étant l'envergure de l'aile, $S$ la surface de l'aile et $\alpha$ l'angle d'incidence.

Il est à noter que $C_L$ est le coefficient de portance à incidence nulle, qui vaut 0 lorsque le profil d'aile est symétrique.

A partir du coefficient $C_L$ de la portance déterminé nécessaire pour compenser le poids du drone pour chaque inclinaison selon l'angle de tangage du drone, il est déterminé la vitesse aérodynamique du drone V. Pour cela il est déterminé la force de portance L selon la formule suivante :

$$L = \frac{1}{2}\rho S V^2 C_L$$

$\rho$ étant la masse volumique de l'air.

On en déduit que la vitesse aérodynamique V du drone est :

$$V = \sqrt{\frac{2L}{\rho S C_L}}$$

En outre, il est déterminé le coefficient de trainée Cx des ailes en utilisant un modèle pour les profils symétriques connu de la littérature. Par exemple le coefficient de trainée Cx est déterminé selon la formule suivante :

$$Cx = 2Fx/ \rho V^2 S$$

Avec Fx étant la trainée qui est la composante aérodynamique parallèle aux filets d'aire du vent relatif,
$\rho$ étant la masse volumique de l'air,
V étant la vitesse aérodynamique du drone précédemment déterminée,
S étant la surface de la voilure.

Le coefficient de trainée varie en fonction de l'angle d'incidence des ailes. L'angle d'incidence $\alpha$ est déterminé par exemple en fonction de l'angle de tangage $\theta$ dudit corps de drone. Notamment, l'angle d'incidence $\alpha$ peut être déterminé tel que :

$$\alpha = |\theta| - 90°$$

$\theta$ étant défini comme l'angle de cabrage du drone, autrement dit l'angle de tangage du drone.

Ainsi, il va être déterminé le coefficient de trainée pour chaque angle de tangage du drone entre 0° et 90°.

Pour atteindre l'équilibre en vol avion du drone, la traction du drone doit compenser la trainée aérodynamique Fx et la composante du poids du drone sur l'axe de lacet dans le repère du drone.

Ainsi, à partir du coefficient de trainée pour chaque valeur d'angle de tangage, du coefficient de portance, de la composante du poids du drone, il est déterminé la consigne moteur à appliquer correspondant à la commande d'équilibre de vol du drone en mode de vol avion.

Il est à noter, que conformément à l'invention, l'envoi d'une ou plusieurs commandes différenciées est exécuté après la génération de valeurs de consigne d'angle en tangage correspondant à l'angle d'inclinaison à mettre en oeuvre et l'application de ces valeurs de consigne à une boucle d'asservissement de contrôle des moteurs du drone.

La consigne d'angle est déterminée sous forme de trajectoire angulaire idéale que le drone devrait suivre et sera utilisée comme consigne par le système intégré de navigation et de contrôle d'attitude du drone. La commande permettant d'exécuter cette trajectoire en boucle ouverte comprend une précommande d'anticipation qui complète la commande du système intégré de navigation et de contrôle d'attitude du drone, cette précommande d'anticipation étant déterminée à partir d'une boucle d'asservissement en considérant la différence entre la trajectoire idéale que le drone devrait poursuivre conformément à la consigne reçue et la trajectoire qu'il effectue réellement.

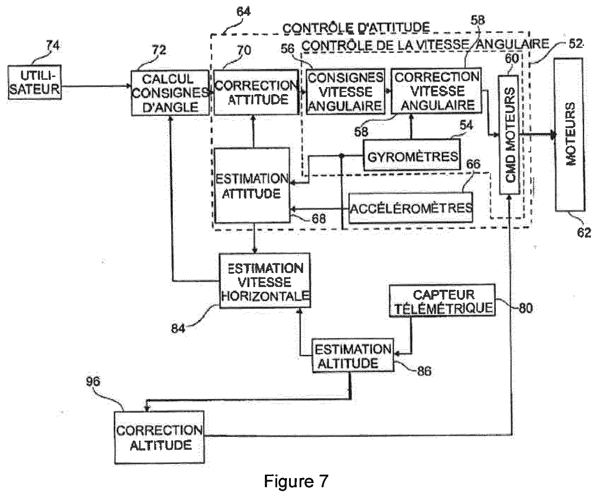

La Figure 7 est un schéma par blocs fonctionnels des différents organes de contrôle et d'asservissement du drone. On notera toutefois que, bien que ce schéma soit présenté sous forme de circuits interconnectés, la mise en oeuvre des différentes fonctions est essentiellement logicielle, et cette représentation n'a qu'un caractère illustratif.

Le procédé de conversion dynamique d'attitude d'un drone à voilure tournante conformément à l'invention met en jeu plusieurs boucles imbriquées pour le contrôle de la vitesse angulaire et de l'attitude du drone, en plus du contrôle des variations d'altitude automatiquement.

La boucle la plus centrale, qui est la boucle 52 de contrôle de la vitesse angulaire, utilise d'une part les signaux fournis par des gyromètres 54, et d'autre part une référence constituée par des consignes de vitesse angulaire 56, ces différentes informations étant appliquées en entrée d'un étage 58 de correction de la vitesse angulaire. Cet étage 58 pilote un étage 60 de contrôle des moteurs 62 afin de commander séparément le régime des différents moteurs pour commander la vitesse angulaire du drone par l'action combinée des rotors entraînés par ces moteurs.

La boucle 52 de contrôle de la vitesse angulaire est imbriquée dans une boucle 64 de contrôle d'attitude, qui opère à partir des indications fournies par les gyromètres 54 et des accéléromètres 66, ces données étant appliquées en entrée d'un étage d'estimation d'attitude 68 dont la sortie est appliquée à un étage 70 de correction d'attitude de type PI (Proportionnel-Intégrateur). L'étage 70 délivre à l'étage 56 des consignes de vitesse angulaire, qui sont également fonction de consignes d'angle générées par un circuit 72 à partir de commandes directement appliquée par l'utilisateur 74, ces consignes d'angle sont générées conformément au procédé de conversion dynamique d'attitude d'un drone à voilure tournante selon l'invention.

À partir de l'erreur entre la consigne et la mesure de l'angle donnée par le circuit d'estimation d'attitude 68, la boucle 64 de contrôle d'attitude (circuits 54 à 70) calcule une consigne en vitesse angulaire à l'aide du correcteur PI du circuit 70. La boucle 52 de contrôle de la vitesse angulaire (circuits 54 à 60) calcule ensuite la différence entre la consigne de vitesse angulaire précédente et la vitesse angulaire effectivement mesurée par les gyromètres 54. La boucle calcule à partir de ces informations les différentes consignes de vitesse de rotation à envoyer aux moteurs 62 du drone pour réaliser la rotation demandée par l'utilisateur.

L'estimation de la vitesse horizontale V par le circuit 84 est réalisée à partir des informations fournies par le circuit d'estimation d'attitude 68 et de l'estimation d'altitude donnée par le circuit 86, notamment au moyen d'un capteur télémétrique à ultrason 80, ainsi que d'un modèle. L'estimation de la vitesse horizontale V réalisée par le circuit 84 est fournie au circuit 72 pour la mise en oeuvre du procédé de contrôle dynamique d'attitude du drone conformément à l'invention.

**Revendications**

1. Procédé de conversion dynamique d'attitude d'un drone à voilure tournante comprenant

   - un corps de drone (12) comprenant une carte électronique contrôlant le pilotage du drone,
   - quatre bras de liaison (16), chaque bras comprenant fixé solidairement un bloc propulseur (14),

   **caractérisé en ce que** les bras de liaison (16) formant des ailes portantes, le procédé comprend l'exécution, à réception d'une instruction de conversion de vol permettant au drone d'effectuer une conversion du vol entre un vol utilisant la voilure tournante et un vol utilisant au moins en partie la portance des ailes, ladite conversion étant définie par un angle de tangage à atteindre $\theta_{ref}$, d'une séquence d'étapes répétée jusqu'à atteindre ledit angle de tangage $\theta_{ref}$ :

   - estimer l'angle de tangage courant $\theta_{est}$ dudit drone,
   - déterminer une trajectoire angulaire en fonction de l'angle de tangage à atteindre $\theta_{ref}$ (E10),
   - envoyer une ou plusieurs commandes différenciées à un ou plusieurs blocs propulseurs (E12) de manière à produire une rotation du drone autour de l'axe de tangage, asservies à la trajectoire angulaire et à l'angle de tangage courant estimé $\theta_{est}$.

2. Procédé de contrôle dynamique selon la revendication précédente, **caractérisé en ce que** ladite instruction de conversion comprend l'angle de tangage à atteindre $\theta_{ref}$.

3. Procédé de contrôle dynamique selon l'une quelconque des revendications précédentes, **caractérisé en ce que** la trajectoire angulaire est une trajectoire cible en accélération angulaire et/ou en vitesse angulaire et/ou en angle.

4. Procédé de contrôle dynamique selon l'une quelconque des revendications précédentes, **caractérisé en ce que** l'étape d'estimation de l'angle de tangage courant $\theta_{est}$ dudit drone est effectuée à partir de la mesure de la vitesse angulaire du drone.

5. Procédé de contrôle dynamique selon la revendication précédente, **caractérisé en ce que** le procédé comprend en outre, une étape de détermination d'une précommande d'anticipation à partir de la trajectoire angulaire et de l'angle de tangage courant estimé.

6. Procédé de contrôle dynamique selon la revendication précédente, **caractérisé en ce que**, à partir de la trajectoire angulaire déterminée et de la précommande d'anticipation, le procédé comprend en outre la génération de valeurs de consigne (E11) correspondant à une position angulaire à l'instant donné et appliquer ces valeurs de consigne à une boucle d'asservissement de contrôle des moteurs du drone.

7. Procédé de contrôle dynamique selon la revendication précédente, **caractérisé en ce que** les valeurs de consigne sont des consignes d'angle d'inclinaison du drone par rapport à son axe de tangage.

8. Procédé de contrôle dynamique selon l'une quelconque des revendications précédentes, **caractérisé en ce que** le procédé comprend en outre les étapes suivantes :

   - déterminer l'altitude dudit drone précédant l'exécution de l'instruction de conversion,
   - estimer l'altitude courante du drone,
   - déterminer une trajectoire en altitude et en vitesse verticale en fonction de l'altitude précédant l'exécution de l'instruction de conversion (E13),
   - envoyer une ou plusieurs commandes différenciées à un ou plusieurs blocs propulseurs (E15) de manière à produire une correction de l'altitude du drone, asservies à la trajectoire en altitude et en vitesse verticale et à l'altitude courante estimée.

9. Procédé de contrôle dynamique selon l'une quelconque des revendications précédentes, dans lequel le drone comprend en outre un bloc batterie, **caractérisé en ce que** le procédé comprend en outre une étape de mesure de la tension dudit bloc batterie (E4) et **en ce que** la ou les commandes différenciées sont en outre déterminées à partir de la tension dudit bloc batterie mesurée.

10. Procédé de contrôle dynamique selon l'une quelconque des revendications précédentes, dans lequel le drone comprend en outre au moins un capteur à ultrason, **caractérisé en ce que** le procédé comprend en outre une étape d'activation / désactivation du capteur à ultrason (E5).

11. Procédé de contrôle dynamique selon l'une quelconque des revendications précédentes, **caractérisé en ce que**, lors d'une conversion de vol entre un vol utilisant la voilure tournante vers un vol utilisant au moins en partie la portance des ailes, le procédé comprend en outre une étape préalable de réduction de la vitesse angulaire maximale sur l'axe de tangage et/ou de la vitesse angulaire maximale sur l'axe de roulis (E1).

12. Procédé de contrôle dynamique selon l'une quelconque des revendications 1 à 10, **caractérisé en ce que**, lors d'une conversion de vol entre un vol utilisant au moins en partie la portance des ailes vers un vol utilisant la voilure tournante, l'angle de tangage à atteindre est sensiblement nul.

13. Drone à voilure tournante comprenant

   - un corps de drone (12) comprenant une carte électronique contrôlant le pilotage du drone,
   - quatre bras de liaison (16), chaque bras comprenant fixé solidairement un bloc propulseur (14),

   **caractérisé en ce que** les bras de liaison (16) forment des ailes portantes, et **en ce que** le drone est apte à mettre en oeuvre le procédé de contrôle dynamique selon l'une quelconque des revendications 1 à 12.

14. Ensemble comprenant un dispositif de commande d'un drone à voilure tournante et un drone à voilure tournante conformément à la revendication 13, le dispositif de commande comprend un ensemble d'instructions de pilotage, une instruction de cet ensemble d'instruction est une instruction de conversion du vol du drone afin d'effectuer une conversion entre un vol en voilure tournante et un vol utilisant la portance des ailes.

15. Ensemble selon la revendication 14, **caractérisé en ce que**, lors d'une instruction de conversion entre un vol utilisant la voilure tournante vers un vol utilisant au moins en partie la portance des ailes, l'instruction de conversion comprend un angle de tangage à atteindre $\theta_{ref}$.

Figures

Figure 1

Figure 2

Figure 3

Figure 4

E1

E2

E3

E4

E5

| Réduction vitesse angulaire | Détermination de la consigne moteur en mode de vol classique | Détermination de la consigne moteur en mode de vol avion | Détermination de la tension du bloc batterie | Activation / désactivation du capteur télémètre |

Figure 5

E10

E13

| Détermination de la trajectoire angulaire | Détermination de la trajectoire en altitude |

E11

E14

E16

| Calcul consignes d'attitude | Calcul consignes d'altitude | Compensation de la commande d'équilibre |

E12

E15

| Envoi de commandes différenciées | Envoi de commandes différenciées |

Figure 6

Figure 7

Europäisches
Patentamt

European
Patent Office

Office européen
des brevets

# RAPPORT DE RECHERCHE EUROPEENNE

Numéro de la demande

EP 17 17 3552

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2016/144957 A1 (CLARIDGE JERRY DANIEL [US] ET AL) 26 mai 2016 (2016-05-26) * le document en entier * ----- | 1-15 | INV. G05D1/08 |
| Y | EP 2 541 359 A1 (PARROT [FR]) 2 janvier 2013 (2013-01-02) * le document en entier * ----- | 1-15 | |
| A | WO 97/15492 A2 (BOTHE HANS JURGEN [CA]) 1 mai 1997 (1997-05-01) * le document en entier * ----- | 1-15 | |

DOMAINES TECHNIQUES
RECHERCHES (IPC)

G05D
B64C

Le présent rapport a été établi pour toutes les revendications

| Lieu de la recherche | Date d'achèvement de la recherche | Examinateur |
|---|---|---|
| Munich | 27 octobre 2017 | Thomann, Jérôme |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 17 17 3552

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-10-2017

| Document brevet cité au rapport de recherche | Date de publication | Membre(s) de la famille de brevet(s) | Date de publication |
|---|---|---|---|
| US 2016144957 A1 | 26-05-2016 | AU 2015354671 A1<br>CN 105620735 A<br>EP 3224140 A1<br>US 2016144957 A1<br>WO 2016085610 A1 | 13-07-2017<br>01-06-2016<br>04-10-2017<br>26-05-2016<br>02-06-2016 |
| EP 2541359 A1 | 02-01-2013 | CN 102847324 A<br>EP 2541359 A1<br>FR 2977333 A1<br>JP 6021470 B2<br>JP 2013010499 A<br>US 2013006448 A1 | 02-01-2013<br>02-01-2013<br>04-01-2013<br>09-11-2016<br>17-01-2013<br>03-01-2013 |
| WO 9715492 A2 | 01-05-1997 | AU 7272696 A<br>BR 9610900 A<br>CN 1202861 A<br>CN 1378952 A<br>DE 69621033 D1<br>DE 69621033 T2<br>EP 0854821 A2<br>EP 1209076 A2<br>EP 1211172 A2<br>EP 1211173 A2<br>JP H11513635 A<br>RU 2160689 C2<br>US 5823468 A<br>WO 9715492 A2 | 15-05-1997<br>18-01-2000<br>23-12-1998<br>13-11-2002<br>06-06-2002<br>22-08-2002<br>29-07-1998<br>29-05-2002<br>05-06-2002<br>05-06-2002<br>24-11-1999<br>20-12-2000<br>20-10-1998<br>01-05-1997 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- EP 2364757 A1
- EP 2450862 A1, Parrot